# EUROPEAN PATENT APPLICATION

(11) **EP 3 293 858 A1**
(43) Date of publication of application: **14.03.2018**
(21) Application number: 16789353.6
(22) Date of filing: 07.04.2016
(51) Int. Cl.: H02K 1/27, H02K 21/22

(54) **ROTOR FOR OUTER ROTOR BRUSHLESS ELECTRIC MOTOR**

(30) Priority: 05.05.2015 ES 201530610
(71) Applicant: Soler & Palau Research, S.L., 08150 Parets del Vallés (Barcelona) (ES)
(72) Inventor: GAMISSANS BOU, Màrius, 08150 Parets del Vallès (Barcelona) (ES)
(74) Representative: Evens, Paul Jonathan
(86) International application number: PCT/ES2016/070235
(87) International publication number: WO 2016/177919

(57) **Abstract**

The invention relates to a rotor for an outer rotor brushless electric motor, formed by a casing containing a shaft (4) for assembly on the electric motor of application and magnets (2) for activating the operation, and consisting of an aluminum casing (6), made in a single part, which defines a cylindrical body closed at one end, in the center of which there is a structure (7) provided with an axial opening (8) in which the shaft (4) is assembled, while on the outer part the cylindrical body itself defines a structure (9) for holding an element that has to rotate with the rotor.

## Description

### Technical Field

The present invention relates to the formation of outer rotor brushless electric motors, proposing a rotor for said type of motors, structurally developed so as to have features making it advantageous with respect to the rotors used today in such motors.

### State of the Art

Outer rotor brushless electric motors offer structural, functional and performance features that make motors of this type particularly preferred with respect to brushed electric motors, which have been all but disregarded in many applications.

Due to the functional system of said electric motors, their rotor requires a casing made of a magnetic material in order to fix the magnets of the operating system thereon; therefore, the rotor in those motors is generally made with a casing formed by press forming sheet iron, thereby complying with the requirement needed for the mentioned motors.

Said conventional casing of rotors for outer rotor brushless electric motors has to be complemented with holding means for holding a shaft for assembly of the rotor on the motor of application, which is solved by incorporating a secondary bushing in an axial opening of the casing, wherein the bushing has to be fixed in order to be integral with the casing, which requires operations increasing the cost of the rotor, in addition to defining a possible loosening and misalignment of the assembly of the bushing, causing a malfunctioning of the motor of application.

On the other hand, for applications of the rotor, such as driving fan propellers or impellers, there is a need to incorporate on the casing of the rotors a flange for fastening the element to be driven, which in turn complementary requires operations which also increase the cost of the rotor.

It would therefore be of interest to develop a rotor for the mentioned outer rotor brushless electric motors, which allows suitably complying with the specifications required by the application in motors of this type, while at the same time avoiding the issues of increasing the manufacturing cost conventional rotors of said application entail.

### Object of the Invention

The invention proposes a rotor intended for outer rotor brushless electric motors, said rotor being made so as to have structural features that make it advantageous with respect to conventional rotors of that application.

This rotor object of the invention consists of a structural casing made from molded aluminum, said casing defining a cylindrical shape closed at one end, there being in the center of said closed end a structure provided with an axial opening in which the shaft of the rotor is assembled; while on the outer part the peripheral wall of the body of the casing defines a structure for fastening an element that has to rotate with the rotor, such as a propeller of an axial fan or an impeller of a radial fan; there being arranged in the inner part of said peripheral wall of the body of the casing a cylindrical packing made of annular sheets or a cylindrical body made of a sheet of magnetic material, on which the magnets of the functional system of the rotor are arranged.

A rotor which suitably integrates the magnets needed for operation in an outer rotor brushless motor is thereby obtained, providing a casing made of a lightweight and corrosion-resistant material, such as aluminum, which casing defines a structure for assembly of the shaft of the rotor and a structure for holding any element that has to rotate with the rotor integrated in a single structural part.

That being the case, the rotor is the result of a simpler and more cost-effective manufacture than conventional rotors of the same application are, since its casing includes all the necessary structural parts integrated in a single part, without having to incorporate secondary elements in the body of the casing after it is formed, which reduces manufacturing operations and furthermore prevents possible clearances and disconnections of attachments of independent parts associated with the body of the casing.

As a result, said rotor object of the invention has features, making it novel and preferred with respect to rotors with an iron casing conventionally used in outer rotor brushless electric motors.

### Description of the Drawings

Figure 1 shows a diametral section of a conventional rotor with an iron casing for an outer rotor brushless electric motor.
Figure 2 shows a diametral section of an exemplary rotor for an outer rotor brushless electric motor, according to the invention, in an embodiment intended for incorporating an axial element, such as a fan propeller.
Figure 3 is a diametral section of an exemplary rotor for an outer rotor brushless electric motor, according to the invention, in an embodiment intended for incorporating a radial element, such as a fan impeller.
Figure 4 is a diametral section of a rotor like the one in Figure 2, internally incorporating a cylindrical body made of a sheet, instead of a packing made of annular sheets, on which the magnets of the rotor are held.

### Detailed Description of the Invention

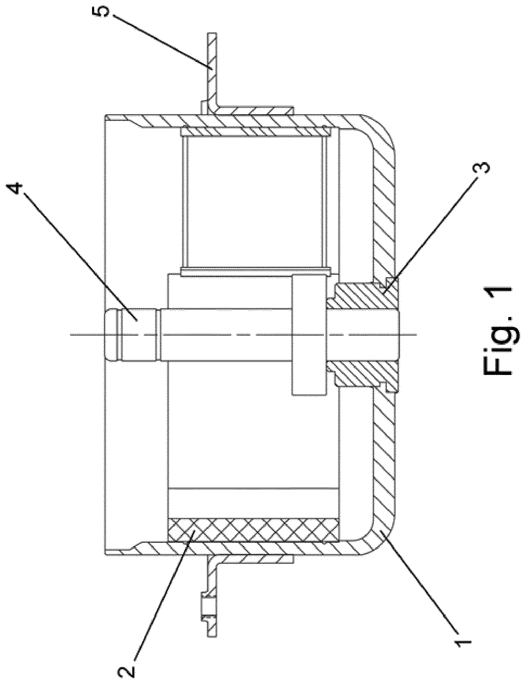

The object of the invention is a rotor for outer rotor brushless electric motors which has been developed according to an embodiment that improves the structural features of the rotors conventionally used in said application, such as the one depicted in Figure 1, which has a casing (1) formed by press forming sheet iron, on which there are arranged in the inner part magnets (2) which define the operation of the rotor in the motor of application.

In said type of rotor, the casing (1) made of sheet iron requires the secondary incorporation of a bushing (3) for holding a shaft (4) for assembly of the rotor in the motor of application, as well as the incorporation of a flange (5) on the outer part for holding the element that has to be made to rotate with the rotor, such as a propeller of an axial fan or a impeller of a radial fan, the incorporation of the mentioned bushing (3) and of the mentioned flange (5) requiring complementary assembly and fixing operations that increase the cost of the rotor and make it susceptible to clearances and misalignments that may cause a malfunction of the motor in which the rotor is arranged.

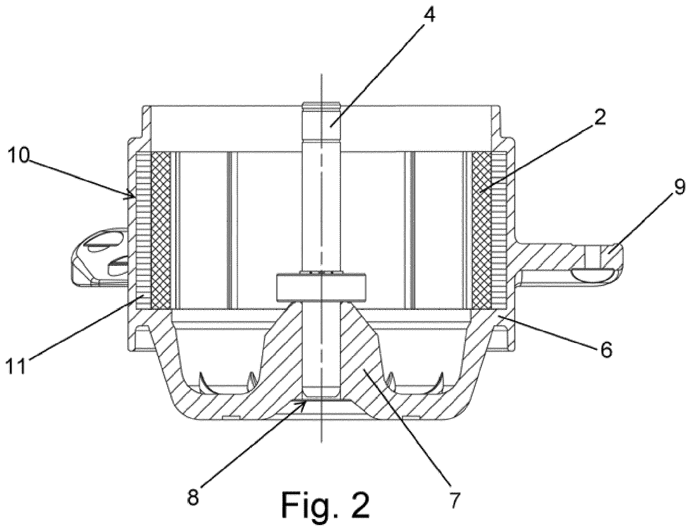

The rotor object of the invention (Figures 2, 3 and 4) consists of an aluminum casing (6), which can be made by molding, which casing (6) is formed by a cylindrical body closed at one end, there being in the center of the closed end a structure (7) provided with an axial opening (8) in which the shaft (4) of the rotor is assembled, without having to incorporate a secondary bushing for said assembly.

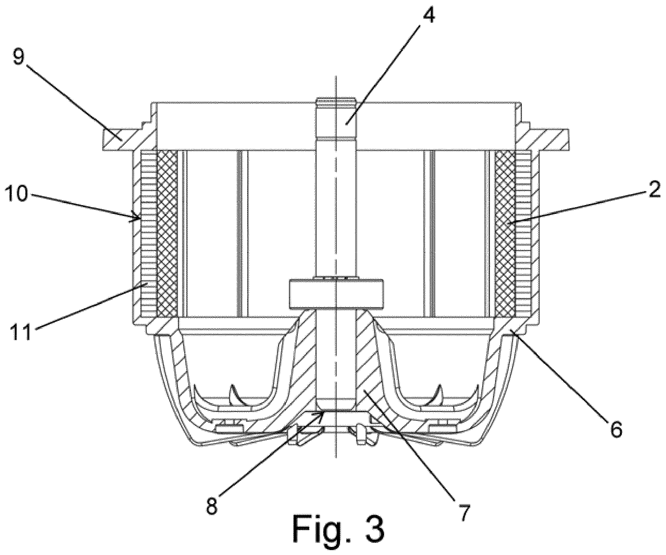

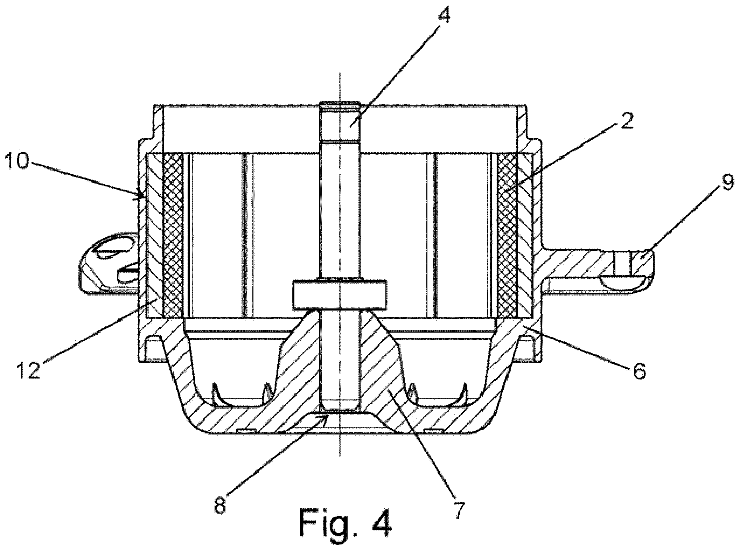

Furthermore, the body itself of the casing (6) defines a structure (9) on the outer part for holding the element that has to rotate with the rotor, where said structure (9) may be provided, for example, like in the embodiment of Figures 2 and 4, for holding the blades of an axial fan propeller, according to a configuration in the form of lugs, there being as many lugs are there are blades to be held, for a blade to be held by each lug; or said structure (9) can be formed like in the embodiment of Figure 3, according to a configuration in the form of an annular projection, for holding a element such as a radial fan impeller. Both of such embodiments are nonlimiting.

On the other hand, the cylindrical wall of the body of the casing defines a housing (10) in the inner part, wherein there is arranged a cylindrical packing (11) made of magnetic sheets, like in the examples of Figures 2 and 3, or a cylindrical body (12) made of a magnetic sheet, like in the example of Figure 4, on which the magnets (2) forming the functional assembly for operatively rotating the rotor in the motor of application are fixed.

All this results in a rotor having the functional advantages of conventional rotors for outer rotor brushless motors, and furthermore having the structural advantages of an aluminum casing (6), which defines in its structural part a structure (7) for assembly of the shaft (4) of the rotor and a structure (9) for holding the element that has to rotate with the rotor, without having to incorporate secondary elements for those functions.

## Claims

1. A rotor for an outer rotor brushless electric motor, formed by a casing containing a shaft (4) for assembly on the electric motor of application and magnets (2) for activating the operation, **characterized in that** it consists of an aluminum casing (6), made in a single part, which defines a cylindrical body closed at one end, in the center of which there is a structure (7) provided with an axial opening (8) in which the shaft (4) is assembled, while on the outer part the cylindrical body itself defines a structure (9) for holding an element that has to rotate with the rotor.

2. The rotor for an outer rotor brushless electric motor according to claim 1, **characterized in that** the structure (9) has a configuration in the form of lugs for holding a blade of an axial fan propeller on each lug.

3. The rotor for an outer rotor brushless electric motor according to claim 1, **characterized in that** the structure (9) has a configuration in the form of an annular projection for holding an element such as a radial fan impeller thereon.

4. The rotor for an outer rotor brushless electric motor according to claim 1, **characterized in that** the cylindrical body of the casing (6) defines a housing (10) in the inner part, wherein there is arranged a cylindrical packing (11) made of magnetic sheets on which the magnets (2) which activate operation of the rotor are held.

5. The rotor for an outer rotor brushless electric motor according to claim 1, **characterized in that** the cylindrical body of the casing (6) defines a housing (10) in the inner part, wherein there is arranged a cylindrical body (12) made of a magnetic sheet on which the magnets (2) which activate operation of the rotor are held.
